# EUROPÄISCHE PATENTSCHRIFT

(11) **EP 2 525 241 B1**
(45) Veröffentlichungstag und Bekanntmachung des Hinweises auf die Patenterteilung: **09.01.2019**
(21) Anmeldenummer: 12003712.2
(22) Anmeldetag: 10.05.2012
(51) Int. Cl.: G01V 5/00

(54) **Bildanalyse für Kampfmittelbeseitigung und Sicherheitskontrollen**
Image analysis for disposing of explosives and safety checks
Analyse d'image pour l'isolation de moyens de lutte et contrôles de sécurité

(30) Priorität: 16.05.2011 DE 202011100744 U; 07.09.2011 DE 102011112652
(43) Veröffentlichungstag der Anmeldung: 21.11.2012
(73) Patentinhaber: Airbus Defence and Space GmbH, 85521 Ottobrunn (DE)
(72) Erfinder: Vogelmann, Dietmar, 85084 Reichertshofen (DE)
(74) Vertreter: LKGLOBAL Lorenz & Kopf PartG mbB Patentanwälte

(56) Entgegenhaltungen:
- WO-A1-2010/050952
- US-A1- 2005 128 069
- US-A1- 2008 212 742
- US-A1- 2009 257 555

## Beschreibung

### Gebiet der Erfindung

Die Erfindung betrifft das technische Gebiet der Kampfmittelbeseitigung und der Sicherheitskontrollen. Insbesondere betrifft die Erfindung eine Untersuchungsvorrichtung zur Identifikation gefährlicher Objekte im Bereich der Kampfmittelbeseitigung und/oder der Sicherheitskontrollen, ein entsprechendes Untersuchungsverfahren, ein computerlesbares Medium und ein Programmelement.

### Technologischer Hintergrund

Personal an Sicherheitskontrollen, die ein Röntgengerät verwenden, haben in der Regel nur sehr wenig Zeit, um das geröntgte Objekt und dessen Inhalt einzuschätzen. Dies trifft vor allem auf Flughäfen und touristische Attraktionen zu. Hierbei müssen zum gröbsten Teil handelsübliche Gegenstände beurteilt werden und es muss eingeschätzt werden, ob diese Gegenstände verändert wurden und ob sie gefährliche Produkte oder Stoffe enthalten. Diese Beurteilung findet in der Regel aufgrund persönlicher Erfahrungswerte und eigener Einschätzung statt.

Die US 2005/128069 A1 beschreibt ein Verfahren zum Detektieren von Schmuggelware, das das Speichern von Daten enthält, die eine erste Verteilung von Referenzgrößen darstellen, die beim Abtasten von Referenzobjekten eines ersten Bedrohungstyps gemessen werden.

Die WO 2010/050952 A1 beschreibt ein System zum Identifizieren eines potenziell eine Bedrohung enthaltenden Objekts aus einer Klasse von Objekten, das einer Bildgebung unter Verwendung einer Bildgebungsvorrichtung unterzogen wurde.

### Zusammenfassung der Erfindung

Es ist eine Aufgabe der Erfindung, Sicherheitskontrollen und Kampfmittelbeseitigungen sicherer zu gestalten.

Diese Aufgabe wird durch die Merkmale der unabhängigen Ansprüche gelöst. Weiterbildungen der Erfindung ergeben sich aus den Unteransprüchen und der folgenden Beschreibung.

Die im Folgenden beschriebenen Ausführungsbeispiele betreffen gleichermaßen die Untersuchungsvorrichtung, das Programmelement, das computerlesbare Medium und das Verfahren. In anderen Worten lassen sich Merkmale, die im Folgenden im Hinblick auf die Untersuchungsvorrichtung beschrieben werden, auch als entsprechende Verfahrensschritte in dem Verfahren implementieren. Weiterhin ist es möglich, dass auch sämtliche genannte Verfahrensschritte auch von der Untersuchungsvorrichtung, ggf. in Verbindung mit einer Bedienperson, ausgeführt werden können.

Gemäß einem ersten Aspekt der Erfindung ist eine Untersuchungsvorrichtung zur Identifikation gefährlicher Objekte im Bereich der Kampfmittelbeseitigung und/oder der Sicherheitskontrollen angegeben. Die Untersuchungsvorrichtung weist eine Sensor- und Bilddatengenerierungsanordnung zur Untersuchung des gefährlichen Objekts und zur Erstellung eines Bildes des Objekts auf. Darüber hinaus ist eine Vergleichseinheit vorgesehen, die dem Vergleichen des Bildes mit bereits bekannten, gespeicherten Referenzbildern dient, wobei die Referenzbilder digitale Bilder von Referenzobjekten sind.

Diese Referenzbilder können beispielsweise außerhalb der Untersuchungsvorrichtung oder auf einem Speicher der Untersuchungsvorrichtung gespeichert sein. Beispielsweise kann die Untersuchungsvorrichtung an eine zentrale Datenbank angebunden sein, auf der die digitalen Bilder der Referenzobjekte gespeichert sind. Die Datenverbindung kann hierbei, je nach Ausführungsform, kabelgebunden und/oder drahtlos erfolgen.

Insbesondere ist es möglich, dass die Untersuchungsvorrichtung mehrteilig ausgeführt ist und eine drahtgebundene oder drahtlose Schnittstelle zwischen einzelnen Einheiten der Untersuchungsvorrichtung aufweist.

Beispielsweise kann die Sensor- und Bilddatengenerierungsanordnung im deutlichen Abstand zu der Vergleichseinheit angeordnet sein. Dies kann dem Schutz des Bedienpersonals dienen.
Bei der Sensor- und Bilddatengenerierungsanordnung handelt es sich demnach um eine Anordnung, die ein bildgebendes Verfahren ausführt. Beispielsweise kann es sich hierbei um eine Röntgenanlage zur Erstellung eines Röntgenbildes, eine Ultraschallanlage zur Erstellung eines Ultraschallbildes, eine Magnetresonanzanlage zur Erstellung eines MR-Bildes und/oder eine Positronen-Emissions-Tomographie-Anlage zur Erstellung eines PET-Bildes des Objekts handeln.
Zusätzlich hierzu können auch Videoaufnahmen des Objekts erzeugt werden, die beispielsweise dann zusammen mit den übrigen Bilddaten an die Vergleichseinheit übermittelt werden.

Die Vergleichseinheit ist weiterhin zur automatischen, teilautomatischen und/oder manuellen Erstellung eines virtuellen Schaltkreises ausgeführt, um die Funktion eines möglichen Sprengsatzes, der sich im Objekt befindet, darzustellen. Weiterhin ist die Vergleichseinheit zur automatischen Überprüfung des virtuellen Schaltkreises ausgeführt. Beispielsweise kann der Benutzer anhand des Bildes des Objekts mit Hilfe einer entsprechenden Eingabe- und Bedieneinrichtung der Vergleichseinheit (hierbei kann es sich beispielsweise um ein separates Laptop, eine tragbare Bedieneinheit oder eine Bedienkonsole der Vergleichseinheit handeln) einen virtuellen Schaltkreis erstellen. Diese Schaltkreiserstellung kann von der Vergleichseinheit unterstützt werden, beispielsweise indem diese bestimmte Schaltkreiskomponenten vorgibt, die dann zusammengeschlossen werden müssen.

Auch kann, gemäß einer weiteren Ausführungsform der Erfindung, die Schaltkreiserstellung vollautomatisch erfolgen.

Nach der Erstellung des virtuellen Schaltkreises überprüft dann die Vergleichseinheit automatisch, ob der erstellte virtuelle Schaltkreis funktionsfähig ist. Dies kann den Bombenentschärfem die Arbeit deutlich erleichtern.

Gemäß einem weiteren Aspekt der Erfindung ist die Vergleichseinheit zur manuellen Einstellung einer Filterfunktion ausgeführt, um eine Auswahl eines Referenzbildes aus einem, viele verschiedene Referenzbilder umfassenden Datensatz zu vereinfachen.

Der Benutzer kann den entsprechenden Filter (Filterfunktion) selbstständig setzen, beispielsweise unter Berücksichtigung bestimmter Produktkategorien. Auf diese Weise kann die Identifikation des Objekts oder von in dem Objekt enthaltenen Objekten (Fön, Radio, Mobiltelefon, Sprengsatz, etc.) vereinfacht werden.

Gemäß einem weiteren Aspekt der Erfindung ist die Untersuchungsvorrichtung zur Identifikation von Sprengsätzen und Brandsätzen ausgeführt, die in dem Objekt enthalten sind.

Beispielsweise kann die Untersuchungsvorrichtung als mobile Einrichtung ausgeführt sein, welche im Feldeinsatz verwendet wird.

Gemäß einem weiteren Aspekt der Erfindung ist die Sensoranordnung zur Erstellung eines Röntgenbildes, eines Ultraschallbildes, eines MR-Bildes und/oder PET-Bildes des Objekts ausgeführt.

Gemäß einem weiteren Aspekt der Erfindung weist die Untersuchungsvorrichtung weiterhin eine mobile Robotereinheit auf, welche die Sensor- und Bilddatengenerierungsanordnung trägt.

Diese mobile Robotereinheit kann insbesondere im Bereich der Kampfmittelbeseitigung eingesetzt werden.

Gemäß einem weiteren Aspekt der Erfindung ist die Untersuchungsvorrichtung als Sicherheitskontrollvorrichtung für Gepäckstücke, Fracht oder beispielsweise Postsendungen ausgeführt. Solche Sicherheitskontrollvorrichtungen sind in Flughäfen oder sonstigen Umschlageinrichtungen im Einsatz.

Gemäß einem weiteren Aspekt der Erfindung ist die Untersuchungsvorrichtung als Personenkontrollvorrichtung, beispielsweise in Form einer Ganzkörperscanvorrichtung ausgeführt.

In diesem Fall kann die Untersuchung auf Basis von Röntgenstrahlen oder auf Basis der sog. Terahertzmethode erfolgen. Diese beiden Untersuchungsmethoden sind im Bereich der sog. Bodyscanner bekannt.

Gemäß einem weiteren Aspekt der Erfindung ist die Untersuchungsvorrichtung zur automatischen Durchführung des Vergleichs und zur Klassifikation des Objekts auf Basis des Vergleichs ausgeführt.

Die Interaktion mit einem Benutzer ist somit nicht erforderlich. Auch mag es sein, dass die Untersuchungsvorrichtung eine Vorauswahl trifft und der Benutzer die Richtigkeit dieser Vorauswahl verifiziert.

Gemäß einem weiteren Aspekt der Erfindung ist ein Verfahren zur Identifikation gefährlicher Objekte im Bereich der Kampfmittelbeseitigung und/oder der Sicherheitskontrollen angegeben. Zunächst erfolgt eine Untersuchung des Objekts, woraufhin ein Bild des Objekts erstellt wird. Bei dem Bild handelt es sich beispielsweise um ein Röntgenbild oder um ein anderes der oben genannten Bilder.

Daraufhin erfolgt eine Auswahl eines Referenzbildes aus einer Vielzahl an Referenzbildem, wobei die Referenzbilder digitale Bilder von Referenzobjekten sind.
Durch einen anschließenden Vergleich des Referenzbildes mit dem Bild des Objekts kann festgestellt werden, ob es sich bei dem Objekt um ein gefährliches Objekt handelt.

Es wird weiterhin eine automatische, teilautomatische oder manuelle Erstellung eines virtuellen Schaltkreises ausgeführt, um die Funktion eines möglichen Sprengsatzes, der sich in dem Objekt befindet, darzustellen. Daraufhin wird eine automatische Überprüfung des virtuellen Schaltkreises ausgeführt.
Auch kann eine manuellen Einstellung einer Filterfunktion durchgeführt werden, um eine Auswahl eines Referenzbildes aus einem, viele verschiedene Referenzbilder umfassenden Datensatz zu vereinfachen.
Gemäß einem weiteren Aspekt kann eine automatische Durchführung des Vergleichs und eine Klassifikation des Objekts auf Basis des Vergleichs durchgeführt werden.
Gemäß einem weiteren Aspekt der Erfindung ist ein Programmelement angegeben, das, wenn es auf einem Prozessor einer oben und im Folgenden beschriebenen Untersuchungsvorrichtung ausgeführt wird, die Untersuchungsvorrichtung anleitet, zumindest einige oder gar alle der oben und im Folgenden beschriebenen Verfahrensschritte durchzuführen.
Gemäß einem weiteren Aspekt der Erfindung ist ein computerlesbares Medium angegeben, auf dem ein entsprechendes Programmelement gespeichert ist, das, wenn es auf einem Prozessor einer Untersuchungsvorrichtung (wie sie oben und im Folgenden beschrieben ist) ausgeführt wird, die Untersuchungsvorrichtung anleitet, zumindest einige der oben und im Folgenden beschriebenen Verfahrensschritte durchzuführen.

Dabei kann das Programmelement ein Computerprogramm oder Teil einer Software sein, die auf einem Prozessor einer Untersuchungsvorrichtung gespeichert ist. Der Prozessor kann dabei ebenso Gegenstand der Erfindung sein. Weiterhin umfasst diese Ausführungsform ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

Kurze Beschreibung der Figuren:
Fig. 1 zeigt eine Bildschirmdarstellung des Bildschirms der Vergleichseinheit gemäß einem Ausführungsbeispiel der Erfindung.
Fig. 2 zeigt drei Auswahlfelder für die Darstellung der Fig. 1.
Fig. 3A zeigt eine Liste von Referenzobjekten gemäß einem Ausführungsbeispiel der Erfindung.
Fig. 3B zeigt eine bildliche Darstellung von auswählbaren Referenzobjekten gemäß einem Ausführungsbeispiel der Erfindung.
Fig. 4 zeigt eine Darstellung zur Auswahl einer Suchfunktion gemäß einem Ausführungsbeispiel der Erfindung.
Fig. 5 zeigt eine Detailansicht des Objekts gemäß einem Ausführungsbeispiel der Erfindung.
Fig. 6 zeigt die Darstellung eines Bildes des Objekts gemäß einem Ausführungsbeispiel der Erfindung.
Fig. 7 zeigt einen Vergleich zwischen einem Bild des Objekts und einem Bild eines Referenzobjekts.
Fig. 8 zeigt den Vorgang einer Schaltkreiserstellung gemäß einem Ausführungsbeispiel der Erfindung.
Fig. 9 zeigt ein Flussdiagramm eines Verfahrens gemäß einem Ausführungsbeispiel der Erfindung.
Fig. 10 zeigt eine Untersuchungsvorrichtung gemäß einem Ausführungsbeispiel der Erfindung.
Fig. 11 zeigt eine Untersuchungsvorrichtung gemäß einem weiteren Ausführungsbeispiel der Erfindung.
Fig. 12 zeigt eine Untersuchungsvorrichtung gemäß einem weiteren Ausführungsbeispiel der Erfindung.
Fig. 13 zeigt eine Vergleichseinheit gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

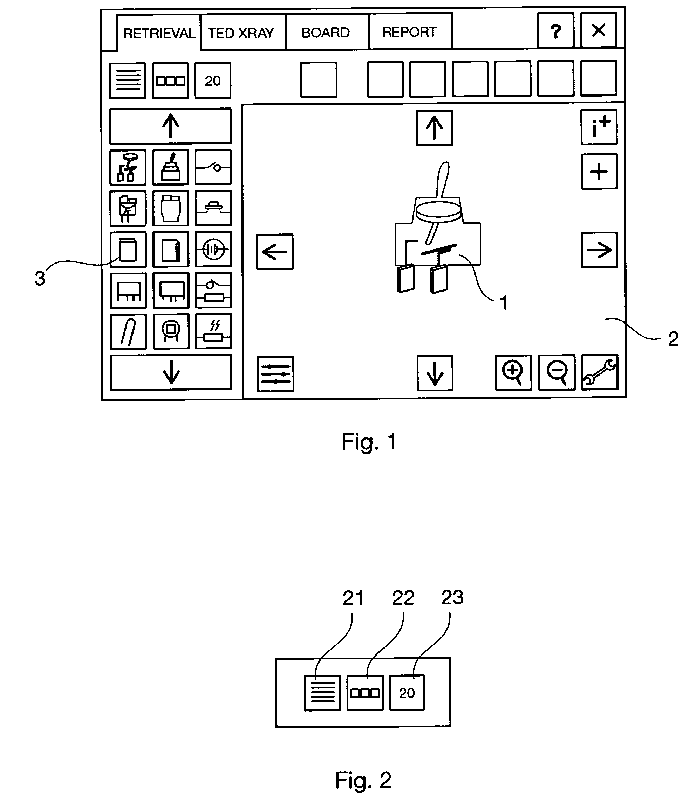

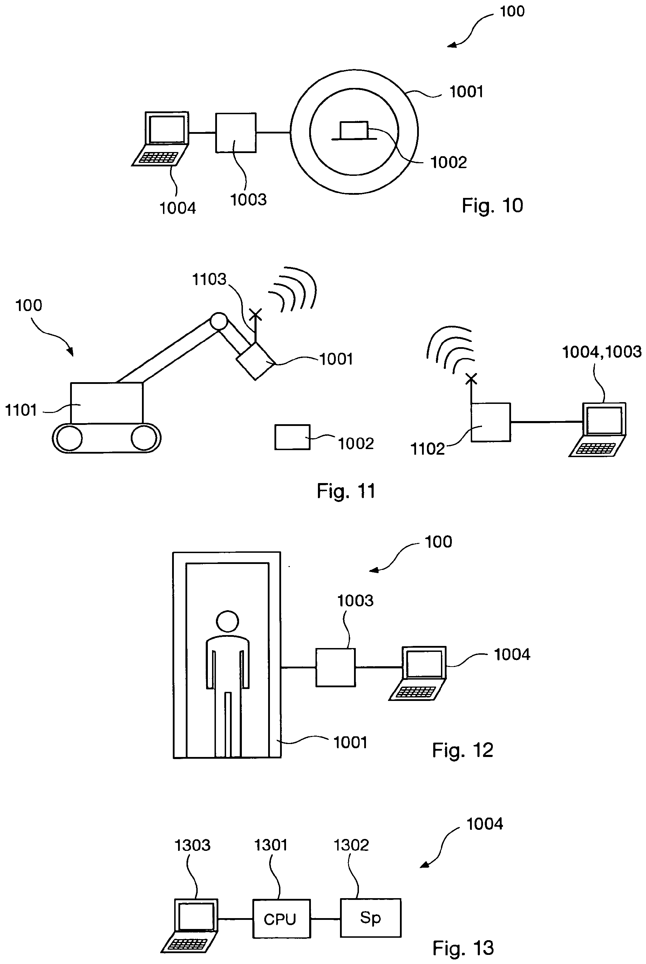

Fig. 1 zeigt die Darstellung eines Bildschirms der Vergleichseinheit 1004 (siehe Fig. 10).

Die Untersuchungsvorrichtung ist in der Lage, einen weitgehend verzugslosen Abgleich eines als Bild dargestellten verdächtigen Objekts (beispielsweise eines Röntgenbildes) mit Referenzobjekten aus einer Datenbank zur Beurteilung der tatsächlichen Bedrohung durch dieses verdächtige Objekt bereitzustellen. Es wird ein interaktiv nutzbarer, digitaler Bild- und Bauteilkatalog von Referenzobjekten bereitgestellt. Bei diesen Referenzobjekten handelt es sich beispielsweise um Objekte, die in verdächtigen und gefährlichen Objekten gefunden werden können und identifiziert werden müssen. Insbesondere kann es sich um unkonventionelle Spreng- und/oder Brandvorrichtungen handeln (sog. USBV oder IED, was für "Improvised Explosive Device" steht).

Weiterhin besteht die Möglichkeit, nach der Identifikation des gefährlichen Objekts einen virtuellen Schaltkreis anzulegen, um die Funktion eines möglichen Sprengsatzes darzustellen und zu simulieren.

Die Sprengstoffentschärfer führen somit nahezu unbegrenzt viele Daten mit in den Einsatz, der Einsatz von Software spart auch Gewicht. Weiterhin kann durch die Verwendung von Filterfunktionen und durch die Implementierung einer einfachen Bedieneinheit Zeit gewonnen werden.

Im Bereich der Sicherheitskontrollen lässt sich ebenfalls ein erheblicher Zeitgewinn für Bediener der Sicherheitskontrolleinrichtung (beispielsweise Röntgenkontrolleinrichtung) darstellen, insbesondere wenn Zweifel am Inhalt eines verdächtigen Objekts besteht. Zudem kann die Sicherheit deutlich erhöht werden, da Entscheidungen aufgrund von Referenzobjekten anstatt aufgrund persönlicher Einschätzung getroffen werden können.

Im übrigen kann die Entscheidungsfindung automatisiert oder teilautomatisiert werden.

Durch die oben und im Folgenden beschriebene Bildanalyse für Kampfmittelbeseitigung und Sicherheitskontrollen wird es dem Anwender ermöglicht, Bilder, beispielsweise Röntgenbilder, von verdächtigen und/oder gefährlichen Objekten, wie beispielsweise unkonventionelle Spreng- und Brandvorrichtungen, schnell und unkompliziert mit Referenzobjekten zu vergleichen.

Im Folgenden wird das System am Beispiel einer röntgenbasierten Untersuchungsvorrichtung beschrieben. Die folgende Beschreibung trifft aber selbstverständlich auch für die oben genannten alternativen Untersuchungsvorrichtungen zu.

Das System wird nahe der Röntgenkontrolle am Arbeitsplatz des Kontrolleurs eingesetzt. Bei Unsicherheiten in der Beurteilung des Inhaltes eines verdächtigen Objekts wählt der Kontrolleur auf der Bedienoberfläche (z.B. eine Touch-Oberfläche) einer der Systemkomponenten die entsprechende Gruppe von Referenzobjekten, beispielsweise Haartrockner oder Mobiltelefone, an und wählt eines der zur Verfügung gestellten Referenzprodukte aus. Durch die Auswahl des Referenzprodukts wird dieses Produkt vergrößert und präziser dargestellt. Der hierdurch mögliche eingehende Vergleich zwischen dem Referenzprodukt und dem Bild des verdächtigen Objekts ermöglicht es dem Bediener, handelsübliche Geräte auf ihre Unverändertheit hin zu untersuchen und ggf. Folgemaßnahmen einzuleiten.

Findet der Bediener einen gefährlichen Gegenstand oder Stoff, kann er eine Gegenkontrolle einleiten und entsprechend des sog. "I4C IED Component Catalogue + Circuit Constructor" die elektrischen und explosionsgefährlichen Einzelteile vergleichen, um Gewissheit über die Gefährlichkeit zu erlangen.

Bei dem I4C IED Component Catalogue + Circuit Constructor handelt es sich um eine Computersoftware, die den Vergleich des Bildes des Objekts mit Referenzbildern zulässt und darüber hinaus eine nachfolgende Erstellung eines virtuellen Schaltkreises ermöglicht, wiederum gefolgt von einer Überprüfung des so erstellten Schaltkreises auf Funktionstüchtigkeit.

Im Folgenden sei der sog. I4C IED Component Catalogue + Circuit Constructor beschrieben.

Dieses Computerprogrammprodukt (auch Programmelement oder Computerprogrammelement bzw. Computerprogramm genannt) eignet sich insbesondere zum Einsatz durch polizeiliche oder militärische Bomben- und Sprengsatzentschärfer, aber selbstverständlich auch zum Einsatz bei Sicherheitskontrollen.

Polizeiliche und militärische Entschärfer sind oft gezwungen, vor dem Beseitigen von Sprengfallen (sog. IEDs) Informationen über das IED zu sammeln. Dazu gehört u. a. das Röntgen, um sich einen Eindruck vom Innenleben und der Funktion des Objekts zu verschaffen. Die auf dem Röntgenbild erkannten Teile müssen alle identifiziert und einer Funktion zugeordnet werden. Erst nach dieser Analyse kann eine lageorientierte Entscheidung getroffen werden, wie weiter vorgegangen werden soll. Je nach Ladungsgröße und Ladungsart kann das von einer spreng- oder schießtechnischen Beseitigung über manuelles Delaborieren bis zur Auslösung eines Katastrophenalarms reichen.

Gemäß einem Aspekt der Erfindung ermöglicht es die Untersuchungsvorrichtung dem Anwender, die Röntgenbilder eines IEDs präzise auszuwerten. Bauteile können mittels einem Filter eindeutig zugeordnet werden. Nach visueller Identifizierung der Bauteile werden die Funktionsweisen und die möglichen Verwendungen in einem IED durch die Software beschrieben. Die ausgewählten Teile können zum Verständnis des IED virtuell angeordnet werden, um so einen angedeuteten Schaltplan zu erstellen. Die Software wird als operationelles Werkzeug auf Recheneinheiten 1004 (siehe Figs. 10 bis 13), beispielsweise "Roughed Notebooks" oder Tablets, von Entschärfern und Sicherheitspersonal eingesetzt.

Das erfindungsgemäße Computerprogramm kann auf handelsüblichen Betriebssystemen betrieben werden. Nach dem Start wird ein Login abgefragt, der unautorisierten Zugriff verhindert.

Als Grundfunktionen bietet die Hauptseite beispielsweise die Darstellung des Kataloges und der enthaltenen Einzelteile, eine Importfunktion und Darstellung importierter (Röntgen)aufnahmen verdächtiger Objekte/IEDs, wie Whiteboard zur Schaltplanerstellung, eine Berichtsfunktion (Report), eine Hilfefunktion und eine Programmbeendigungsfunktion.

Eine entsprechende Bildschirmdarstellung ist beispielsweise in Fig. 1 gezeigt, in welcher die Darstellung des Kataloges und einiger der enthaltenen Einzelteile 3 abgebildet ist. Wird ein bestimmtes Einzelteil (Objekt) angewählt, wird dieses auf dem Bildschirmsektor 2 als Objekt 1 dargestellt.

### Auswahl der Anzahl 5 oder 20:

Beispielsweise kann der Katalog seitlich am linken Bildschirmrand mit jeweils fünf angezeigten Einzelteilen dargestellt werden oder ganzseitig mit 20 Einzelteilen, um eine schnellere Auswahl treffen zu können. Bei der Anzeige mit lediglich fünf Einzelteilen wird der Großteil des Bildschirms von der Detailansicht bei der Auswahl ausgefüllt. Bei der Ansicht mit 20 Einzelteilen springt der Bildschirm nach der Auswahl eines Einzelteils auf die "5er-Ansicht", um die Auswahl anzuzeigen. Die "20er-Ansicht" muss dann wieder neu gewählt werden.

Fig. 2 zeigt entsprechende Auswahltasten 21, 22 und 23 zur Auswahl der verschiedenen Ansichten.

### Röntgenansicht oder gemischte Ansicht:

Alle angezeigten Einzelteile in der Übersicht 5 oder 20 werden in drei Ansichten dargestellt und können dabei hoch- oder heruntergescrollt werden. Die Anzeige erfolgt beispielsweise als reine Röntgenansicht mit Röntgenaufnahmen aus beispielsweise drei Richtungen oder als gemischte Ansicht mit einer Röntgenaufnahme aus Frontalansicht, einer Fotografie aus Frontalansicht und entsprechenden Schaltzeichen und Symbolen.

### Liste oder Bilder:

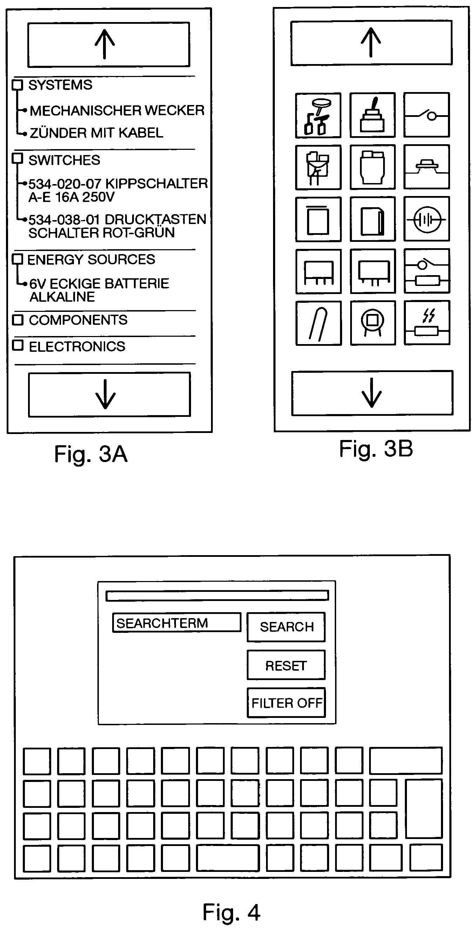

Generell kann die Suche mittels dargestellten Einzelteilen als Bilder durchgeführt werden (siehe Fig. 3B) oder als Liste, in der die Fachbegriffe der Einzelteile verschiedenen Gruppen zugeordnet sind (siehe Fig. 3A).

### Such-Unterstützung:

Die Suche nach bestimmten Einzelteilen kann durch mehrere Funktionen unterstützt werden.

Beispielsweise kann ein sog. "Search-Button" vorgesehen sein. Bei Anwahl des Suchfeldes (Search-Button) geht automatisch ein Fenster für einen Suchbegriff und eine virtuelle Tastatur auf. Gesucht wird nach Stichwörtern in der gesamten Datenbank. Die Suchergebnisse lassen sich durch Aktivierung der Filterkategorien im Nachhinein präzisieren. Dies ist in Fig. 4 dargestellt.

Weiterhin können Filterkategorien angewählt werden, um eine Suche noch strukturierter durchführen zu können. Die Aufteilung der Filterkategorien findet nicht zwingend nur nach technischer und elektrotechnischer Betrachtung statt, sondern kann auch eine Kategorisierung des Bedienpersonals (Sprengstoff- und Brandsatzentschärfer) zulassen. So können z. B. lichtempfindliche Widerstände sowohl bei Elektronik als auch bei Schaltern erscheinen.

Unterteilt werden kann in die folgenden Kategorien:
- Schaltfertige und umschlossene Systeme,
- Schalter,
- Energiequellen,
- Zusatzkomponenten,
- Elektronik,
- Gefahrstoffe.

### Detailansicht:

In der Detailansicht wird jeweils das ausgewählte Bild, Röntgenbild oder Symbol aus der Übersicht dargestellt. Generell gibt es in der Detailansicht die Möglichkeit, das dargestellte Einzelteil einer Auswahl anzufügen, zusätzliche Informationen über die Funktionalität abzurufen und zusätzliche Optionen einzublenden.

Diese Optionen, die als Funktionstasten dargestellt werden, bieten die Möglichkeit, das Bild in verschiedene Richtungen zu verschieben, das Bild zu vergrößern und zu verkleinern oder die Bildqualität nachzuarbeiten.

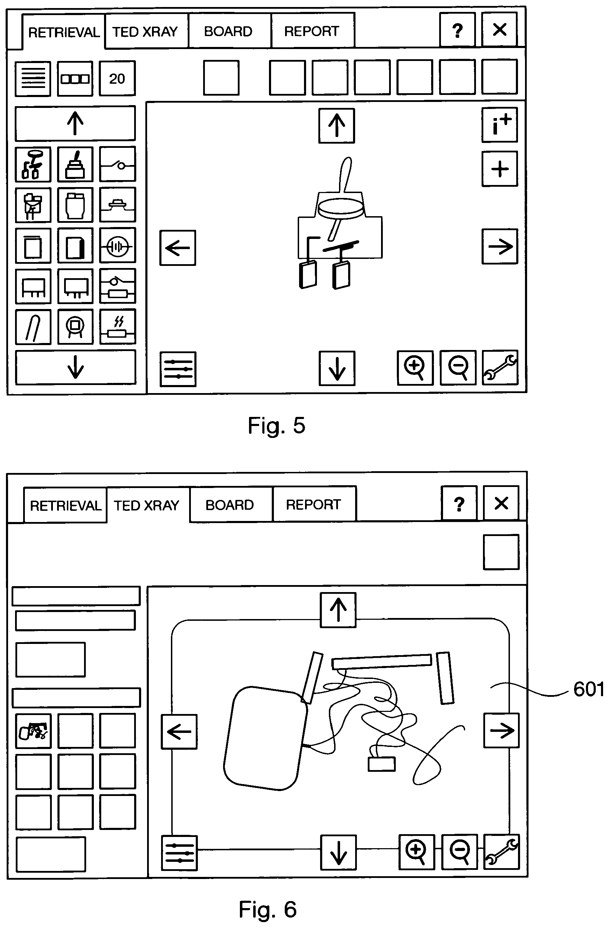

Dies ist in Fig. 5 dargestellt.

### Vergleich:

Durch Auswahl der Vergleichsfunktion ("Compare-Function") wird der Bildschirm aufgeteilt und das ausgewählte Bild aus der Oberfläche "IED Xray" erscheint, um einen Direktabgleich mit dem IED während der Suche zu ermöglichen.

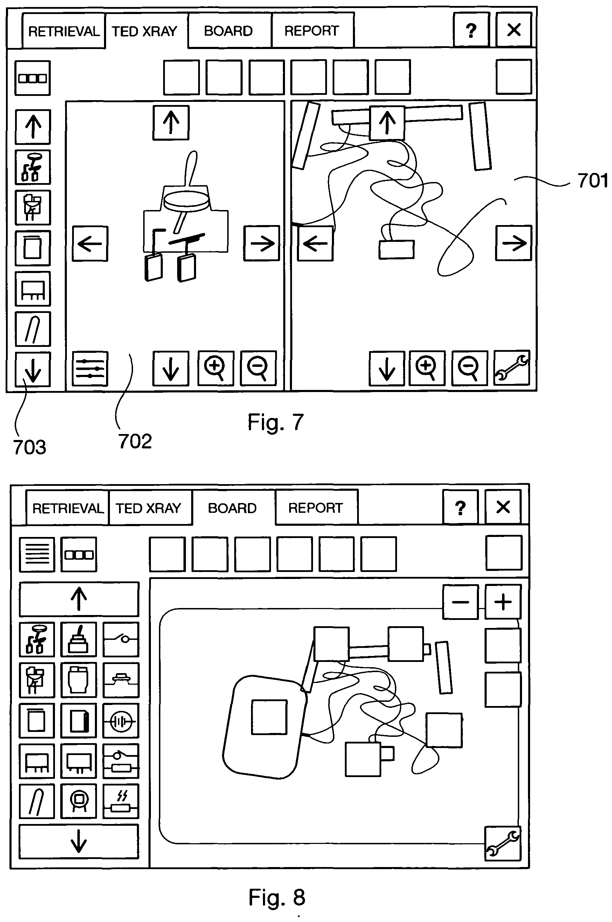

Dies ist beispielsweise in Fig. 7 gezeigt, in welcher auf dem Bildschirmausschnitt 701 das Bild des verdächtigen Objekts einem Referenzobjektbild 702 gegenübergestellt ist.

Im Folgenden sei der Import und die Darstellung importierter Aufnahmen verdächtiger Objekte (beispielsweise Röntgenaufnahmen) beschrieben.

### Import:

Der Import von Bildern setzt voraus, dass die Röntgensoftware, die eingesetzt wurde, um die Röntgenaufnahme zu generieren, den Export von Bildern zulässt. Das Feld "Browse Images" öffnet ein Popup, in dem der Zielort beider exportierten Bilder ausgewählt werden kann. Die ausgewählte Datei wird über "Import" als klein dargestelltes Bild in einer Auswahl von neun möglichen IEDs aufgenommen und auf der Oberfläche "IED Xray" dargestellt. Durch die Anwahl "Remove" können ausgewählte IEDs wieder aus dieser Auswahl entfernt werden.

### Darstellung:

Angewählte Bilder von IEDs werden im großen Bildschirmbereich 601 vergrößert dargestellt (siehe Fig. 6). Zur Ansicht stehen wieder alle Funktionen der Detailansicht zur Verfügung. Um einen präzisen Abgleich zwischen Einzelteil und IED zu ermöglichen, kann der Bildschirm über die Anwahl "Compare" aufgeteilt werden. So entstehen zwei Detailansichten nebeneinander mit allen Funktionen in einer direkten Gegenüberstellung. In der Oberfläche "IED Xray" werden nur die in der Auswahl befindlichen Einzelteile zum Vergleich angeboten. Sie befinden sich in einer schmalen Spalte am Bildschirmrand 703 (siehe Fig. 7) und können über ein Auswahlfeld in ihrer Ansicht verändert werden.

Im Folgenden sei die Erstellung eines virtuellen Schaltkreises näher erläutert.

Diese Funktion hilft bei der Erstellung eines vereinfachten Schaltplans, der räumlichen Zuordnung der Einzelteile mit ihrer Funktion innerhalb des IEDs und somit dem Verständnis, wie das IED funktioniert.

### Ausgewählte Einzelteile:

Alle in der Auswahl befindlichen Einzelteile werden in der Übersicht beispielsweise wie in der sog. "5er"-Übersicht (siehe Fig. 8) dargestellt.

### Schaltplanerstellung:

Die Zuordnung der Teile findet entweder auf einem leeren Hintergrund ("Whiteboard") oder auf einem importierten und ausgewählten Bild einer IED-Röntgenaufnahme statt. In beiden Fällen wird vom Whiteboard gesprochen.

Ein Einzelteil wird in der "5er"-Übersicht ausgewählt und danach der Platz auf dem Whiteboard ausgewählt, an dem das Einzelteil platziert werden soll. Das Einzelteil erscheint an der ausgewählten Stelle und wird automatisch als Symbol dargestellt. Die eingefügten Symbole können jederzeit verschoben und wieder entfernt werden.

Um während der Zuordnung die Übersicht zu gewährleisten, können über Schaltflächen jederzeit sowohl alle Symbole als auch die IED-Röntgenaufnahme aus- und wiedereingeblendet werden.

Über die entsprechende Schaltfläche können die Symbole mit Linien verbunden werden, um so einen Schaltplan zu erstellen.

Gemäß einem speziellen Ausführungsbeispiel der Erfindung kann die Schaltplanerstellung vollautomatisch erfolgen.

### Report:

Für die Erstellung eines Reports bzw. für die Archivierung des Falles in einem Datenbanksystem können verschiedene Erkenntnisse gespeichert und exportiert werden.

Beispielsweise handelt es sich hierbei um die Art der identifizierten Einzelteile, den generierten Schaltplan, die eingegebenen Zusatzinformationen und/oder die Speicherung des kompletten Falles.

### Hilfe:

Nach Drücken des Hilfe-Feldes kann eine beliebige andere Taste gedrückt werden, um Informationen zu dieser zu erhalten. Neben der entsprechenden Taste wird ein Feld mit einem Hilfstext eingeblendet.

### Programm beenden:

Nach Drücken dieses Feldes wird eine Sicherheitsabfrage eingeblendet, ob das Programm wirklich beendet werden soll. Nach Bestätigung wird das Programm geschlossen. Der aktuelle Fall wird eingefroren und automatisch gespeichert.

Das Computerprogramm kann für den militärischen und polizeilichen Einsatz durch Entschärfer verwendet werden. Weiterhin kann ein ziviler Einsatz bei Röntgenkontrollen oder anderweitigen Gepäck- oder Personenkontrollen in Form einer Bildanalyse zur Kampfmittelbeseitigung und Sicherheitskontrolle erfolgen. Verdächtige oder bereits als gefährlich erkannte Objekte können mit Hilfe des Programm verglichen werden.

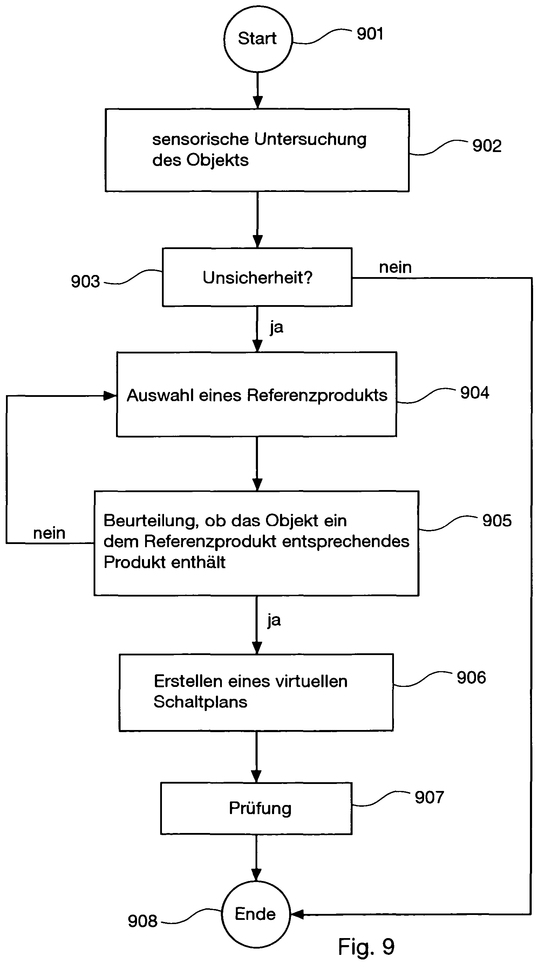

Fig. 9 zeigt ein Flussdiagramm eines Verfahrens gemäß einem Ausführungsbeispiel der Erfindung.

Das Verfahren startet in Schritt 901 und es findet in Schritt 902 eine sensorische Untersuchung eines Objekts statt. Bei dem Objekt kann es sich beispielsweise um ein Gepäckstück, ein Transportgut, einen Postsack oder ein verdächtiges Objekt, wie beispielsweise ein Sprengsatz handeln.

In Schritt 903 wird auf Basis dieser sensorischen (bildgebenden) Untersuchung entschieden, ob dieses Objekt ein gefährliches Objekt sein könnte. Ist dies nicht der Fall, endet das Untersuchungsverfahren in Schritt 907.

Wird allerdings entschieden, dass es sich prinzipiell um ein gefährliches Objekt handeln könnte, wird in Schritt 904 eine Auswahl eines Referenzprodukts oder Referenzobjekts aus einer Datenbank vorgenommen und in Schritt 905 wird dann anhand einer visuellen Analyse, bei der es sich um einen visuellen Vergleich zwischen dem Referenzprodukt und dem als gefährlich klassifizierten Objekt handelt, beurteilt, ob das Objekt ein dem Referenzprodukt entsprechendes Produkt enthält bzw. ist. Ist dies nicht der Fall, wird ein weiteres Referenzprodukt ausgewählt (Schritt 904). Wird in Schritt 905 beurteilt, dass es sich bei dem Objekt um ein dem Referenzprodukt entsprechendes Produkt handelt bzw. das Objekt ein solches Produkt enthält, kann in Schritt 906 ein virtueller Schaltplan erstellt werden. Diese virtuelle Schaltplanerstellung erfolgt rechnergestützt auf Basis des von dem untersuchten Objekt aufgenommenen Bildes.

Danach wird in Schritt 907 überprüft, ob dieser Schaltplan und in welcher Form dieser Schaltplan funktionsfähig ist. Dies kann den Bombenentschärfern die Arbeit maßgeblich erleichtern.

In Schritt 908 endet das Verfahren.

Die Figs. 10 bis 12 zeigen Beispiele für eine Untersuchungsvorrichtung 100. Im Fall der Fig. 10 handelt es sich um eine Röntgenanlage, beispielsweise einen Computertomographen 1001, der ringförmig gestaltet ist und durch den das zu untersuchende Objekt 1002 geschoben wird. Die Röntgenanlage 1001 ist an die Bilddatengenerierungsanordnung 1003 angeschlossen, welche ein Röntgenbild des zu untersuchenden Objekts 1002 erzeugen und dieses dann an die Vergleichseinheit 1004 (bei der es sich beispielsweise um ein Laptop oder dergleichen handelt) weitergegeben.

Fig. 11 zeigt eine Untersuchungsvorrichtung 100 in Form eines Roboters 1101, der die Sensoranordnung 1001 trägt. Die aufgenommenen Daten des Objekts 1002 können über die Drahtlosschnittstelle 1103 an einen fernab angeordneten Empfänger 1102 gesendet werden, der mit einer Bilddatengenerierungsanordnung 1003 und einer Vergleichseinheit 1004 verbunden ist und diesen die empfangenen Daten übergibt.

Fig. 12 zeigt einen sog. Ganzkörperscanner 1001, der Teil der Untersuchungsvorrichtung ist.

Fig. 13 zeigt ein Beispiel für eine Vergleichseinheit 1004, welche in diesem Fall einen Prozessor 1301 und eine Speichereinheit 1302 sowie eine Benutzerschnittstelle 1303 aufweist.

Bei der Speichereinheit 1302 kann es sich beispielsweise um das weiter oben genannte computerlesbare Medium handeln.

Die Erfindung betrifft die Identifikation gefährlicher Objekte im Bereich der Kampfmittelbeseitigung und der Sicherheitskontrollen. Es wird ein Bild des Objekts aufgenommen und mit einem gespeicherten Bild eines Referenzobjekts verglichen. Die Auswahl des Bildes des Referenzobjekts kann über den Einsatz bestimmter Filterfunktionen erleichtert und beschleunigt werden. Auf diese Weise kann eine Klassifizierung des zu untersuchenden Objekts schneller und mit hoher Genauigkeit durchgeführt werden.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Untersuchungsvorrichtung (100) zur Identifikation gefährlicher Objekte (1002) im Bereich der Kampfmittelbeseitigung und/oder der Sicherheitskontrollen, die Untersuchungsvorrichtung aufweisend:
eine Sensor- und Bilddatengenerierungsanordnung (1001, 1003) zur Untersuchung des Objekts und zur Erstellung von einem Bild des Objektes;
eine Vergleichseinheit (1004) zum Vergleichen des Bildes mit bekannten, gespeicherten Referenzbildern;
wobei die Referenzbilder digitale Bilder von Referenzobjekten sind; **dadurch gekennzeichnet, dass** die Vergleichseinheit (1004) weiterhin zur automatischen, teilautomatischen oder manuellen Erstellung eines virtuellen Schaltkreises auf Basis des Bildes des Objektes ausgeführt ist, um die Funktion eines möglichen Sprengsatzes, der sich in dem Objekt befindet, darzustellen; und dass die Vergleichseinheit weiterhin zur automatischen Überprüfung des virtuellen Schaltkreises ausgeführt ist.

2. Untersuchungsvorrichtung nach einem der vorhergehenden Ansprüche,
wobei die Vergleichseinheit (1004) zur manuellen Einstellung einer Filterfunktion ausgeführt ist, um eine Auswahl eines Referenzbildes aus einem, viele verschiedene Referenzbilder umfassenden Datensatz zu vereinfachen.

3. Untersuchungsvorrichtung nach einem der vorhergehenden Ansprüche,
ausgeführt zur Identifikation von Sprengsätzen und Brandsätzen, die in dem Objekt enthalten sind.

4. Untersuchungsvorrichtung nach einem der vorhergehenden Ansprüche,
wobei die Sensoranordnung (1001) zur Erstellung eines Röntgenbildes, eines Ultraschallbildes, eines MR-Bildes und/oder eines PET-Bildes des Objekts ausgeführt ist.

5. Untersuchungsvorrichtung nach einem der vorhergehenden Ansprüche, wobei die Untersuchungsvorrichtung weiterhin eine mobile Robotereinheit (1101) aufweist, welche die Sensor- und Bilddatengenerierungsanordnung trägt.

6. Untersuchungsvorrichtung nach einem der Ansprüche,
ausgeführt als Sicherheitskontrollvorrichtung für Gepäckstücke, Fracht und/oder Postsendungen.

7. Untersuchungsvorrichtung nach einem der Ansprüche,
ausgeführt als Personenkontrollvorrichtung, insbesondere in Form einer Ganzkörperscannervorrichtung.

8. Untersuchungsvorrichtung nach einem der vorhergehenden Ansprüche,
ausgeführt zur automatischen Durchführung des Vergleichs und zur Klassifikation des Objekts (1002) auf Basis des Vergleichs.

9. Verfahren zur Identifikation gefährlicher Objekte im Bereich der Kampfmittelbeseitigung und/oder der Sicherheitskontrollen, das Verfahren aufweisend die folgenden Schritte:
Untersuchen des Objekts;
Erstellen eines Bildes des Objekts;
Auswählen eines Referenzbildes aus einer Vielzahl an Referenzbildern;
Vergleichen des Referenzbildes mit dem Bild des Objekts;
wobei die Referenzbilder digitale Bilder von Referenzobjekten sind; und **dadurch gekennzeichnet dass** das Verfahren weiter den folgenden Schritt aufweist:
Erstellen eines virtuellen Schaltkreises auf Basis des Bildes des Objektes, um die Funktion eines möglichen
Sprengsatzes, der sich in dem Objekt befindet, darzustellen.

10. Verfahren nach Anspruch 9, weiterhin aufweisend den Schritt:
automatisches Überprüfen des virtuellen Schaltkreises.

11. Programmelement, das, wenn es auf einem Prozessor einer Untersuchungsvorrichtung nach einem der Schutzansprüche 1 bis 9 ausgeführt wird, die Untersuchungsvorrichtung anleitet, die folgenden Schritte durchzuführen:
Untersuchen des Objekts (1002);
Erstellen eines Bildes des Objektes;
Auswählen eines Referenzbildes aus einer Vielzahl an Referenzbildern;
Vergleichen des Referenzbildes mit dem Bild des Objekts;
wobei die Referenzbilder digitale Bilder von Referenzobjekten sind; und
Erstellen eines virtuellen Schaltkreises auf Basis des Bildes des Objektes, um die Funktion eines möglichen
Sprengsatzes, der sich in dem Objekt befindet, darzustellen.

12. Computerlesbares Medium (1302), auf dem ein Programmelement gespeichert ist, das, wenn es auf einem Prozessor (1301) einer Untersuchungsvorrichtung (100) nach einem der Schutzansprüche 1 bis 9 ausgeführt wird, die Untersuchungsvorrichtung anleitet, die folgenden Schritte durchzuführen:
Untersuchen des Objekts (1002);
Erstellen eines Bildes des Objektes;
Auswahl eines Referenzbildes aus einer Vielzahl an Referenzbildern;
Vergleichen des Referenzbildes mit dem Bird des Objekts;
wobei die Referenzbilder digitale Bilder von Referenzobjekten sind; und
Erstellen eines virtuellen Schaltkreises auf Basis des Bildes des Objektes, um die
Funktion eines möglichen
Sprengsatzes, der sich in dem Objekt befindet, darzustellen.

## Claims

1. Examination apparatus (100) for identifying dangerous objects (1002) in the field of explosive ordnance disposal and/or safety checks, the examination apparatus having:
a sensor and image data generation arrangement (1001, 1003) for examining the object and for creating an image of the object;
a comparison unit (1004) for comparing the image with known stored reference images;
wherein the reference images are digital images of reference objects;
**characterized in that**
the comparison unit (1004) is also designed to automatically, semi-automatically or manually create a virtual circuit on the basis of the image of the object in order to represent the function of a possible explosive charge in the object; and
**in that** the comparison unit is also designed to automatically check the virtual circuit.

2. Examination apparatus according to one of the preceding claims,
wherein the comparison unit (1004) is designed to manually set a filter function in order to simplify a selection of a reference image from a data record comprising many different reference images.

3. Examination apparatus according to one of the preceding claims,
designed to identify explosive charges and incendiary charges contained in the object.

4. Examination apparatus according to one of the preceding claims,
wherein the sensor arrangement (1001) is designed to create an x-ray image, an ultrasound image, an MR image and/or a PET image of the object.

5. Examination apparatus according to one of the preceding claims, wherein the examination apparatus also has a mobile robot unit (1101) which carries the sensor and image data generation arrangement.

6. Examination apparatus according to one of Claims, in the form of a safety check apparatus for items of luggage, freight and/or postal items.

7. Examination apparatus according to one of Claims, in the form of a person checking apparatus, in particular in the form of a full-body scanner apparatus.

8. Examination apparatus according to one of the preceding claims, designed to automatically carry out the comparison and to classify the object (1002) on the basis of the comparison.

9. Method for identifying dangerous objects in the field of explosive ordnance disposal and/or safety checks, the method having the following steps of:
examining the object;
creating an image of the object;
selecting a reference image from a multiplicity of reference images;
comparing the reference image with the image of the object;
wherein the reference images are digital images of reference objects; and **characterized in that** the method also has the following step of:
creating a virtual circuit on the basis of the image of the object in order to represent the function of a possible explosive charge in the object.

10. Method according to Claim 9, also having the step of:
automatically checking the virtual circuit.

11. Program element which, when executed on a processor of an examination apparatus according to one of Claims 1 to 9, instructs the examination apparatus to carry out the following steps:
examine the object (1002);
create an image of the object;
select a reference image from a multiplicity of reference images;
compare the reference image with the image of the object;
wherein the reference images are digital images of reference objects; and
create a virtual circuit on the basis of the image of the object in order to represent the function of a possible explosive charge in the object.

12. Computer-readable medium (1302) which stores a program element which, when executed on a processor (1301) of an examination apparatus (100) according to one of Claims 1 to 9, instructs the examination apparatus to carry out the following steps:
examine the object (1002);
create an image of the object;
select a reference image from a multiplicity of reference images;
compare the reference image with the image of the object;
wherein the reference images are digital images of reference objects; and
create a virtual circuit on the basis of the image of the object in order to represent the function of a possible explosive charge in the object.

## Revendications

1. Dispositif d'examen (100) pour l'identification d'objets dangereux (1002) dans le domaine de la neutralisation de moyens de lutte et/ou des contrôles de sécurité, le dispositif d'examen comportant :
un système capteur et générateur d'image (1001, 1003) destiné à analyser l'objet et à créer une image de l'objet ;
une unité de comparaison (1004) destinée à comparer l'image à des images de référence stockées connues ;
dans lequel les images de référence sont des images numériques d'objets de référence ;
**caractérisé en ce que** l'unité de comparaison (1004) est en outre conçue pour créer automatiquement, semi-automatiquement ou manuellement un circuit virtuel sur la base de l'image de l'objet afin de représenter la fonction d'un éventuel engin explosif se trouvant dans l'objet ;
et **en ce que** l'unité de comparaison est en outre conçue pour vérifier automatiquement le circuit virtuel.

2. Dispositif d'examen selon l'une des revendications précédentes,
dans lequel l'unité de comparaison (1004) est conçue pour régler manuellement une fonction de filtrage afin de faciliter la sélection d'une image de référence dans un ensemble de données comprenant un grand nombre d'images de référence différentes.

3. Dispositif d'examen selon l'une des revendications précédentes,
conçu pour identifier des engins explosifs et des engins incendiaires contenus dans l'objet.

4. Dispositif d'examen selon l'une des revendications précédentes,
dans lequel le système capteur (1001) est conçu pour créer une image radiographique, une image ultrasonore, une image MR et/ou une image PET de l'objet.

5. Dispositif d'examen selon l'une des revendications précédentes,
dans lequel le dispositif d'examen comprend en outre une unité robotisée mobile (1101) qui porte le système capteur et générateur de données image.

6. Dispositif d'examen selon l'une des revendications,
réalisé sous la forme d'un dispositif de contrôle de sécurité pour les bagages, le fret et/ou le courrier.

7. Dispositif d'examen selon l'une des revendications,
réalisé sous la forme d'un dispositif de contrôle des personnes, en particulier sous la forme d'un scanner corporel.

8. Dispositif d'examen selon l'une des revendications précédentes,
conçu pour effectuer automatiquement la comparaison et pour classer l'objet (1002) sur la base de la comparaison.

9. Procédé d'identification d'objets dangereux dans le domaine de la neutralisation de moyens de lutte et/ou des contrôles de sécurité, comprenant les étapes suivantes :
examiner l'objet ;
créer une image de l'objet ;
sélectionner une image de référence parmi une pluralité d'images de référence ;
comparer l'image de référence à l'image de l'objet ;
dans lequel les images de référence sont des images numériques d'objets de référence ;
et **caractérisé en ce que** le procédé comprend en outre l'étape suivante :
créer un circuit virtuel sur la base de l'image de l'objet afin de représenter la fonction d'un éventuel engin explosif se trouvant dans l'objet.

10. Procédé selon la revendication 9, comprenant en outre l'étape suivante :
vérifier automatiquement le circuit virtuel.

11. Élément de programme qui, lorsqu'il est exécuté sur un processeur d'un dispositif d'examen selon l'une des revendications 1 à 9, ordonne au dispositif d'examen d'effectuer les étapes suivantes :
examiner l'objet (1002) ;
créer une image de l'objet ;
sélectionner une image de référence parmi une pluralité d'images de référence ;
comparer l'image de référence à l'image de l'objet ;
dans lequel les images de référence sont des images numériques d'objets de référence ; et
créer un circuit virtuel sur la base de l'image de l'objet afin de représenter la fonction d'un éventuel engin explosif se trouvant dans l'objet.

12. Support lisible par ordinateur (1302) sur lequel est stocké un élément de programme qui, lorsqu'il est exécuté sur un processeur (1301) d'un dispositif d'examen (100) selon l'une des revendications 1 à 9, ordonne au dispositif d'examen d'effectuer les étapes suivantes :
examiner l'objet (1002) ;
créer une image de l'objet ;
sélectionner une image de référence parmi une pluralité d'images de référence ;
comparer l'image de référence à l'image de l'objet ;
dans lequel les images de référence sont des images numériques d'objets de référence ; et
créer un circuit virtuel sur la base de l'image de l'objet afin de représenter la fonction d'un éventuel engin explosif se trouvant dans l'objet.
